# EUROPÄISCHE PATENTSCHRIFT

(11) **EP 4 549 408 B1**
(45) Veröffentlichungstag und Bekanntmachung des Hinweises auf die Patenterteilung: **28.01.2026**
(21) Anmeldenummer: 24208278.2
(22) Anmeldetag: 23.10.2024
(51) Int. Cl.: C03B 35/06, C03B 35/10

(54) **SYSTEM ZUR ÜBERWACHUNG VON GLASBEHÄLTERN, PRODUKTIONSANLAGE UND VERFAHREN**
SYSTEM FOR MONITORING GLASS CONTAINERS, PRODUCTION PLANT AND METHOD
SYSTÈME DE SURVEILLANCE DE RÉCIPIENTS EN VERRE, INSTALLATION DE PRODUCTION ET PROCÉDÉ

(30) Priorität: 03.11.2023 DE 102023130448
(43) Veröffentlichungstag der Anmeldung: 07.05.2025
(73) Patentinhaber: Heye International GmbH, 31683 Obernkirchen (DE)
(72) Erfinder: Schöttelndreier, Ralf, 31688 Nienstädt (DE); Bindewald, Kai, 31655 Stadthagen (DE)
(74) Vertreter: Michalski Hüttermann & Partner Patentanwälte mbB

(56) Entgegenhaltungen:
- FR-A1- 2 820 730
- JP-A- 2003 083 718
- US-A- 4 801 319

## Beschreibung

Die Erfindung betrifft ein System zur Überwachung von mittels einer IS-Maschine hergestellten und in einen Kühlofen zu fördernden Glasbehältern, mit einer Sensorvorrichtung und einer Steuerungsvorrichtung. Die Erfindung betrifft ferner eine Produktionsanlage mit einer IS-Maschine und ein Verfahren zum Betreiben einer Produktionsanlage mit einer IS-Maschine.

IS-Maschinen zur Herstellung von Glasbehältern sind aus dem Stand der Technik bereits seit Jahrzehnten bekannt. Die Funktion einer IS-Maschine stellt sich typischerweise wie folgt dar:
In einer Wanne wird Glas geschmolzen. Dieses wird über eine Rinne (Feederkanal) geleitet. Am Ende des Feederkanals befindet sich ein Glasauslass (Spout). Im Spout wird mittels eines Rührwerkes oder einer drehenden Tube das Glas homogenisiert. Die Tube dient weiterhin zur Dosierung des Glasausflusses. Ein Plunger presst das Glass aus dem Spout. Beim Rückzug des Plungers wird ein portionierter Glassposten (Tropfen) durch eine Schere (ab-)geschnitten.

Mittels eines Tropfenverteilers werden die Glasposten über Metallrinnen den einzelnen Sektionen zugeführt. Die Behälterformung in einer IS-Maschine ist ein 2-stufiger Formgebungsprozess. In einem ersten Schritt wird ein Vorformling gepresst oder geblasen. Der Vorformling wird in einem zweiten Schritt in die Behälter-Endform geblasen. In beiden Prozessschritten werden der Vorformling und der Behälter kontinuierlich abgekühlt. Ist eine thermische Stabilität erreicht, wird der Behälter aus der Form entnommen und auf einer Absetzplatte abgestellt. Dort wird er weiterhin gekühlt, damit keine Rückerwärmung eintritt und sich der Behälter noch deformiert.

Von den Absetzplatten der IS-Maschine werden die Behälter in einen Kühlofen transportiert. Zunächst werden die Behälter durch einen Pusher von der Absetzplatte auf das Maschinenband geschoben. Am Maschinenband sind eine Lichtschranke und ein Auswerfer installiert, wobei der Auswerfer Behälter nach dem Start einer Sektion, Schmierbehälter oder andere fehlerbehaftete Behälter aus dem Transport entfernt. Anschließend folgt auf dem Maschinenband ein Vergütungstunnel, in dem die Behälter eine Beschichtung erhalten, welche die Kratzempfindlichkeit der Behälter reduziert. Dann werden in der Regel die Behälter zu einer Umlenkecke geführt. Diese verändert die Transportrichtung um 90° und reduziert die Behälterabstände. Ein Querband vor dem Kühlofeneingang transportiert die Behälter zum Einbringen in den Kühlofen. Den Vorgang des Einbringens in den Kühlofen übernimmt ein Einschieber, der die Behälter reihenweise auf Kühlofenbreite in den Kühlofen schiebt. Der Transport der Behälter durch den Kühlofen hindurch erfolgt auf einem Kühlofenband.

Wenn die Glasbehälter fertig geformt sind, werden sie von einer Entnahmevorrichtung aus den Fertigformen entnommen, um sie in der Regel zu der Absetzplatte zu befördern, auf der sie abgekühlt werden und von der sie auf das Maschinenband geschoben werden. Eine herkömmliche Entnahmevorrichtung ist beispielsweise zur Verwendung mit einer Doppeltropfenmaschine vorgesehen, die zwei Entnahmezangen, einen Träger für die Entnahmezangen und einen Mechanismus umfasst, der so angeordnet ist, dass er den Träger bewegen kann, um die Zangen zwischen einer Aufnahmeposition, in der die Zangen geformte Glasartikel aus den Formen der Maschine aufnehmen können, und einer Absetzposition, in der die Zangen die Glasartikel beispielsweise zu einer Kühlstation gefördert werden können, hin und her zu bewegen.

Beim Einsatz einer solchen Entnahmevorrichtung wird der erforderliche Abstand der Entnahmezange voneinander durch den Abstand der Fertigformen voneinander bestimmt. Somit würde ohne weitere Maßnahmen der Abstand der Fertigformen auch den Abstand der Glasbehälter auf der Absetzplatte bestimmen. Herkömmliche Ausstoßmechanismen, die die Glasbehälter von der Absetzplatte auf ein Maschinenband schieben, können den Abstand der Glasbehälter auf dem Maschinenband durch einen geeigneten Abstand von Ausstoßfingern von dem Abstand auf der Absetzplatte verändern, aber das Ausmaß, in dem dies möglich ist, wird durch die Größe und den Abstand der Glasbehälter und die Notwendigkeit, die Finger zwischen den Glasbehältern zu positionieren, stark eingeschränkt. Diese Einschränkung ist bei einer Drei- oder Viertropfenmaschine noch größer als bei einer Doppeltropfenmaschine. Auch wenn versucht wird, den Abstand zu verändern, bewegt sich mindestens einer der Ausstoßfinger zwangsläufig relativ schnell, wenn er den entsprechenden Glasbehälter berührt, wodurch die Gefahr besteht, dass der Glasbehälter beschädigt wird.

Mit dem zunehmenden Einsatz von Mehrtropfenmaschinen und den Bemühungen, die Arbeitsgeschwindigkeit der IS-Maschinen zu erhöhen, ist es auch erforderlich, die Fördergeschwindigkeiten zu erhöhen. Allerdings ist es auch ein Ziel, die Fördergeschwindigkeit so einzustellen, dass Wirtschaftlichkeitsaspekte berücksichtigt werden und mit steigenden Fördergeschwindigkeiten keine Probleme mit Instabilitäten der Glasbehälter auf dem Maschinenband auftreten. Aus diesem Grund wird in der Regel angestrebt, auf dem Maschinenband einen Abstand der Glasbehälter voneinander zu erzielen, der kleiner ist als der Abstand der Fertigformen voneinander. Ein geringerer Abstand der Glasbehälter auf dem Maschinenband zueinander führt dazu, dass eine geringere Fördergeschwindigkeit des Maschinenbandes gewählt werden kann, was einem stabilen und störungsfreien Transport der Glasbehälter zuträglich ist.

Die DE 197 20 664 A1 beschreibt eine Vorrichtung zur Herstellung von Glaskörpern. Die Vorrichtung umfasst eine Überführungseinrichtung zum Überführen heißer Glaskörper aus dem Produktionsbereich in einen Abkühlbereich hinein. Ferner ist eine Testeinrichtung zum optischen Prüfen der heißen Glaskörper auf Defekte hin vorgesehen. Die Testeinrichtung ist im Bereich der Überführungseinrichtung ausgebildet, so dass ein Testen der heißen Glasrohlinge stattfindet, und zwar vor deren Endproduktion nach der Abkühlung. Dadurch werden Rohstoffe, Energie und Zeit gegenüber herkömmlichen Herstellungsverfahren und -vorrichtungen eingespart.

Die DE 38 52 864 T2 beschreibt eine Vorrichtung zum Transportieren und Kontrollieren von Behältern, mit einem Kühlofen zum Kühlen der Behälter, einer Zufuhrfördereinrichtung, die einen Abschnitt hat, der nahe dem Kühlofen angeordnet ist, zum Transportieren der Behälter von einer Quelle für die Behälter zu dem Kühlofen, einer Kontrolleinrichtung zum Kontrollieren wenigstens eines der Behälter, einer Stapeleinrichtung, die auf der dem Abschnitt der Fördereinrichtung gegenüberliegenden Seite des Kühlofens zum Überführen von Behältern von dem Abschnitt der Fördereinrichtung zu dem Kühlofen angeordnet ist, wobei die Stapeleinrichtung eine sich hin- und herbewegende Schubstange zum Berühren der Behälter aufweist, wobei Mittel zum selektiven Ableiten von Behältern vorgesehen sind, die zu der Zufuhrfördereinrichtung geliefert werden, zu der Kontrolleinrichtung, bevor diese Behälter in den Kühlofen geschoben werden, sowie Mittel zum Rückführen derart abgeleiteter Behälter zu der Zufuhrfördereinrichtung oder zu dem Kühlofen, bei denen durch die Kontrolleinrichtung festgestellt ist, dass sie brauchbar sind.

Die DE 10 2004 007 507 A1 beschreibt eine Vorrichtung, die dem Verschieben von Glaswaren, insbesondere von Hohlglaswaren, dient. Die Glaswaren befinden sich hierbei auf einem querbewegten Band (Querband) und werden von dort aus auf ein längsbewegtes Band (Längsband) verschoben. Hierzu verfügt die Vorrichtung über einen Verschiebeteil, der aus einem Schieber, der Ausnehmungen aufweist, in denen die Glaswaren zur Anlage kommen, und einem Trägerteil besteht, an dem der Schieber befestigt ist. Der Schieber führt Zyklen durch und fährt von einer Nullstellung aus über eine nichtlineare Bewegung (Verschiebebewegung) in eine Endstellung, wobei die Glaswaren verschoben werden. Weiterhin umfasst die Vorrichtung einen Bewegungsteil, welcher den Schieber bewegt, und einen Steuerteil, welcher die Bewegungen des Bewegungsteiles steuert. Der Bewegungsteil kann wenigstens drei voneinander unabhängige Rotationsbewegungen ausführen, wobei die Verschiebebewegung durch die Kombination dieser Rotationsbewegungen zustande kommt.

Die FR 2 820 730 A1 beschreibt einen Reihenzuführförderer für Flaschen in Einzelführung mit synchron zur Zuführung bewegter Schiebestange. Der Zuführförderer weist eine an einem Schieber befestigte Stange auf, die mit Flaschen auf einem Zuförderband in Eingriff tritt und eine Flaschenreihe schräg zur Förderrichtung auf ein quer dazu verlaufendes Förderband überträgt. Die Geschwindigkeitskomponente der Stange in Richtung des Zuförderbands ist in Abhängigkeit vom Vorschub der Stange mit der Geschwindigkeit des Zwischenförderbands synchronisiert.

Diese US 4,801,319 A1 betrifft eine Vorrichtung sowie ein zugehöriges Verfahren zur automatisierten stichprobenartigen Inspektion von Behältern und insbesondere von Glasbehältern, wobei die Inspektion vor dem Eintritt des Behälters in das heiße Einlaufende eines Kühlofens erfolgt. Die Vorrichtung und das zugehörige Verfahren umfassen dafür ein Hauptförderband, das eine Behälteranordnung in Position neben einem Kühlofen bringt, sowie eine Stapelvorrichtung mit einer hin- und herbeweglichen Schiebestange, die die Behälter - mit Ausnahme bestimmter zur Inspektion vorgesehener Behälter - reihenweise in den Kühlofen einschiebt.

Die JP 2003 083718 A beschreibt ein visuelles Inspektionssystem zur hochgeschwindigkeitsfähigen Erkennung von Form- und Lageabweichungen bei vielen auf einem Förderband transportierten Körpern. Dabei überwachen eine Oberflächenkamera und mehrere Seitenkameras die Produkte, um Abweichungen der äußeren Form und der Position zu erkennen. Bei einer festgestellten Abweichung wird ein Warnsignal ausgelöst und ein Auswurfsystem aktiviert.

Es ist die Aufgabe der Erfindung, Lösungen im Zusammenhang mit IS-Maschinen anzugeben, um die Arbeitsgeschwindigkeit zu erhöhen, Ausschuss zu verringern und die Möglichkeiten zur Überwachung der Glasbehälterherstellung zu verbessern.

Diese Aufgabe wird durch den Gegenstand der unabhängigen Patentansprüche gelöst. Bevorzugte Weiterbildungen der Erfindung sind in den Unteransprüchen beschrieben.

Erfindungsgemäß vorgesehen ist somit ein System zur Überwachung von mittels einer IS-Maschine hergestellten und in einen Kühlofen zu fördernden Glasbehältern, mit einer Sensorvorrichtung zum Erfassen von Bewegungsinformationen der Glasbehälter und einer Steuerungsvorrichtung, die eingerichtet ist, auf der Grundlage der Bewegungsinformationen Lageparameter der Glasbehälter bereitzustellen und/oder an eine zum Fördern der Glasbehälter zu dem Kühlofen vorgesehene Einschiebeeinrichtung zum Steuern von Bewegungen der Einschiebeeinrichtung zu übermitteln.

In anderen Worten wird ein System in Form einer Überwachungsanlage vorgeschlagen, um noch heiße Glasbehälter auf ihrem Weg in eine Einrichtung zum Abkühlen (Kühlofen) - typischerweise auf einem Maschinenband und ggf. auf einem nachfolgenden Querband - hinsichtlich ihrer Bewegung bzw. ihrer Position (Bewegungsinformationen) einerseits zu erfassen und um andererseits daraus Parameter (Lageparameter) über die Glasbehälter zu erzeugen. Anders gesagt können von der Überwachungsanlage Daten als die Bewegungsinformationen über die Glasbehälter erfasst und als die Lageparameter aufbereitet werden. Die Lageparameter können einerseits beispielsweise für einen Maschinenbediener bereitgestellt werden und alternativ oder ergänzend dazu auch an eine Einschiebeeinrichtung, um deren Betrieb bzw. Ansteuerung an die tatsächlichen Bedingungen angepasst werden

Die Erfindung stellt vorteilhafterweise ein System zur Überwachung des Einschiebevorgangs der heißen Glasbehälter am Kühlofen bereit, beispielsweise von einem Querband ausgehend auf ein durch den Kühlofen hindurchführendes Kühlofenband. Das System kann insbesondere ausgehend von einem Einfädeln der Glasbehälter in einen Einschieberkamm der Einschiebeeinrichtung bis hin zu einem Einlauf in den Kühlofen eingesetzt werden. Dank des Systems können der Ausschuss verringert und/oder die Fördergeschwindigkeit erhöht werden, z.B. weil ein Maschinenbediener Fehlerquellen besser verorten kann. Das System stellt auch die Möglichkeit bereit, Daten zu sammeln, um eine Prozessüberwachung durchzuführen. Außerdem ermöglicht das System, mittels der Bewegungsinformationen bzw. Lageparameter den Maschinenbediener bzw. Maschinenbetreiber darin zu unterstützen, Umbauten durchzuführen.

Die Einschiebeeinrichtung weist vorzugweise einen Einschieberkamm auf. Der Einschieberkamm ist zum Einfädeln von mehreren, beispielsweise drei, vier, fünf, sechs, vorzugsweise zehn oder mehr, insbesondere noch heißen, Glasbehältern vorgesehen. Es können bevorzugt bis zu 70 noch heiße Glasbehälter mit dem Einschieberkamm eingeschoben werden. Die Einschiebeeinrichtung bzw. der Einschieberkamm weist zweckmäßigerweise einen hitzebeständigen Werkstoff für das Anliegen der noch heißen Glasbehälter auf. Die eingefädelten Glasbehälter können mittels des Einschieberkamms längs einer Bewegungsbahn gefördert bzw. geschoben werden, z. B. horizontal längs einer Oberfläche, insbesondere während die Glasbehälter aufrecht stehen. Die Einschiebeeinrichtung kann den Einschieberkamm gesteuert bewegen. Die Einschiebeeinrichtung ist insbesondere zum taktweisen Betrieb ausgebildet, insbesondere im Takt mit einem Maschinenband oder Querband. Die Bewegungsbahn ist insbesondere eine gekrümmte Bahn, die vorzugsweise anteilig in Förderrichtung des Querbands bzw. des Maschinenbands verläuft. Die Einschiebeeinrichtung kann zumindest einen Servomotor oder mehrere Servomotoren aufweisen, die zur Bewegung des Einschieberkamms ausgebildet sind.

Ein Maschinenband bzw. ein Querband im Sinne der vorliegenden Offenbarung weist vorzugsweise ein endloses Band zur insbesondere geradlinigen Förderung von Glasbehältern auf. Das endlose Band läuft beispielsweise oberseitig in eine Richtung und unterseitig in die entgegengesetzte Richtung. Das Band kann abschnittsweise oder vollständig horizontal, ansteigend oder absteigend fördernd ausgerichtet sein. Das Band weist zweckmäßigerweise einen hitzebeständigen Werkstoff für die Auflage der heißen Glasbehälter auf.

Die Sensorvorrichtung kann die Bewegungsinformationen datenmäßig erfassen bzw. bereitstellen. Erfindungsgemäß ist die Sensorvorrichtung eine Kamera, wie eine Webcam, die beispielsweise Bild- oder Videomaterial bereitstellen kann. Typischerweise ist die Sensorvorrichtung gegen Hitze von den Glasbehältern zu schützen. Daher ist bevorzugt ein Gehäuse und/oder eine Kühlung als ein solcher Hitzeschutz vorgesehen.

Insbesondere ist die Steuerungsvorrichtung mit der Sensorvorrichtung verbunden und/oder kann von der Sensorvorrichtung die Bewegungsinformationen erhalten. Vorzugsweise weist die Steuerungsvorrichtung einen Computer auf. Die Steuerungsvorrichtung kann regelmäßig die Bewegungsinformationen nutzen bzw. verarbeiten, um die Lageparameter zu erzeugen. Letztlich dient die Steuerungsvorrichtung vorzugsweise dazu, Daten von der Sensorvorrichtung zu verarbeiten, um diese abrufen oder zur Steuerung/Regelung z.B. an die Einschiebeeinrichtung weiterleiten zu können. Die Steuerungsvorrichtung kann eine Software bzw. ein Computerprogramm ausführen. Die Steuerungsvorrichtung kann mit der Sensorvorrichtung integriert ausgebildet sein und/oder in einer IS-Maschine bzw. Produktionsanlage vorgesehen sein.

Unter den Lageparametern werden insbesondere Daten verstanden, die sich auf die Glasbehälter beziehen. Vorteilhaft sind die Lageparameter aus den Bewegungsinformationen abgeleitet. Beispielsweise werden die Bewegungsinformationen ausgewertet bzw. verarbeitet, um Lageparameter zu erzeugen. Vorzugsweise wird durch Bildverarbeitung von Fotos erkannt, welchen Abstand zwei bestimmte Glasbehälter zueinander aufweisen.

Wenn die Lageparameter an die Einschiebeeinrichtung übermittelt werden, ist es möglich, dass die Einschiebeeinrichtung dadurch gesteuert wird. Beispielsweise kann die Einschiebeeinrichtung eine Bewegungskorrektur umsetzen, die Glasbehälter zuverlässiger einzufädeln bzw. zum Kühlofen zu fördern bzw. zu schieben. Insoweit ist es bevorzugt, dass die Steuerungsvorrichtung unter dem Oberbegriff der Lageparameter für die Einschiebeeinrichtung passende Bewegungsdaten bzw. Bewegungskurven erzeugt und übermittelt. Aber auch die Einschiebeeinrichtung kann dazu ausgebildet sein, Bewegungskurven aus Lageparametern zu erzeugen.

Erfindungsgemäß weist die Sensorvorrichtung eine Kamera zum Bereitstellen von Bildinformationen über die Glasbehälter aif. Die Bewegungsinformationen können die Bildinformationen umfassen oder durch diese gebildet sein. Die Kamera dient insbesondere zum Erfassen der Glasbehälter. Beispielsweise sind ein Bildsensor bzw. CCD-Sensor und eine Optik vorgesehen, um die Glasbehälter lichtoptisch zu erfassen und/oder um die Bildinformationen zu generieren. Insbesondere ist die Kamera eine Digitalkamera. Die Kamera kann mit einer Beleuchtung für die Glasbehälter vorgesehen sein. Es können auch mehrere Kameras vorgesehen sein, beispielsweise in entsprechender Anzahl wie die Anzahl an Glasbehältern, die mittels Einschiebeeinrichtung gleichzeitig zum Kühlofen gefördert bzw. geschoben werden sollen.

Die Kamera ist (bzw. die Kameras sind) vorzugsweise in einem Schutzgehäuse der Sensorvorrichtung angeordnet. Vorzugsweise ist die Sensorvorrichtung mit einer zum Kühlen der Sensorvorrichtung vorgesehenen Kühlungseinrichtung versehen. Die Kühlungseinrichtung kann, insbesondere am Schutzgehäuse, eine Kühlstruktur und/oder einen Lüfter aufweisen. Die Steuerungsvorrichtung kann zusammen mit der Kamera und insbesondere in dem Schutzgehäuse integriert ausgebildet sein.

Die Steuerungsvorrichtung ist vorzugsweise zum Durchführen einer Datenverarbeitung ausgebildet, um aus den Bewegungsinformationen die Lageparameter zu berechnen. Insbesondere kann die Steuerungsvorrichtung aus den kamerabasierten Bildinformationen als den Bewegungsinformationen die Lageparameter erzeugen und/oder berechnen. Vorzugsweise ist die Steuerungsvorrichtung zum Abspeichern der Bildinformationen und/oder der Lageparameter ausgebildet.

Die Lageparameter umfassen erfindungsgemäß eine Bewegungskurve eines Einschieberkamms der Einschiebeeinrichtung. Die Lageparameter umfassen erfindungsgemäß auch eine Bewegungskurve der Glasbehälter, und zwar von einem Einfädeln der Glasbehälter in die Einschiebeeinrichtung bis hin zu einem Eingang in den Kühlofen. Die Bewegungskurve kann insbesondere von der Steuerungsvorrichtung berechnet werden. Es wird vorzugsweise eine Fehlererkennung ermöglicht, soweit Glasbehälter auf dem Weg zum Kühlofen unerwünscht positioniert sind.

Die Lageparameter können eine Position der Glasbehälter auf einem Maschinenband und/oder auf einem Querband umfassen. Es kann eine Position aller mit der Einschiebeeinrichtung zu erfassenden bzw. erfassten Glasbehälter von den Lageparametern umfasst sein. Insbesondere wird eine Fehlererkennung ermöglicht, soweit Glasbehälter auf dem Maschinenband bzw. dem Querband unerwünscht positioniert sind.

Die Lageparameter können einen Versatz zwischen der Einschiebeeinrichtung und einer Position der Glasbehälter auf einem Maschinenband und/oder einem Querband längs des jeweiligen Bandes umfassen. Anders gesagt enthalten die Lageparameter insoweit Informationen darüber, inwieweit eine Abweichung zwischen einem die Glasbehälter erfassenden Einschieberkamm und einer zum Einschieberkamm und zu dessen Bewegungsbahn passenden Aufreihung der Glasbehälter vorliegt. Das Wissen um den Versatz ermöglicht eine Erkennung bzw. Korrektur der Einschiebeeinrichtung, damit Fehler vermieden bzw. zumindest verringert werden können.

Die Lageparameter können eine Information über ein Auftreten eines Behälterverlustes umfassen. Ein Behälterverlust betrifft insbesondere einen umgefallenen und/oder fehlgeschobenen und/oder beschädigten Glasbehälter. Ein Behälterverlust kann vielfältig auftreten, beispielsweise hervorgerufen durch eine Kollision z.B. an der Einschiebeeinrichtung, durch eine Fehlproduktion eines Glasbehälters, durch instabilen Stand eines Glasbehälters, durch Störungen oder andere Ursachen. Insbesondere können die Lageparameter den Ort des Auftretens des Behälterverlustes umfassen, um hier die Möglichkeit zu bieten, zielgerichtet einzugreifen.

Das System kann eine Schnittstelle zur Kommunikation mit der IS-Maschine und/oder mit der Einschiebeeinrichtung aufweisen. Über die Schnittstelle können die Lageparameter übermittelt und/oder abrufbar bereitgestellt werden. Die Schnittstelle kann dazu dienen, die Lageparameter an die Einschiebeeinrichtung zu übermitteln, damit die Einschiebeeinrichtung auf dieser Grundlage gesteuert werden kann, beispielsweise um Behälterverluste zu verringern.

Vorgeschlagen wird ferner eine Produktionsanlage aufweisend wenigstens eine IS-Maschine, einen Kühlofen, ein zum Fördern von mit der IS-Maschine hergestellten Glasbehältern zu dem Kühlofen ausgebildetes Band, eine zum Fördern von den Glasbehältern von dem Band zu dem Kühlofen ausgebildeten Einschiebeeinrichtung sowie das zuvor beschriebene System. Insbesondere ist die Einschiebeeinrichtung im Bereich des Übergangs zwischen Band und Kühlofen angeordnet. Das Band ist vorzugsweise ein Querband oder ein Maschinenband, sofern kein Querband vorhanden ist. Der Übergang von dem Band erfolgt vorzugsweise auf ein Kühlofenband, das die Glasbehälter durch den Kühlofen hindurchtransportiert.

Bei der Produktionsanlage ist die Sensorvorrichtung vorzugsweise von oben auf die Einschiebeeinrichtung, den Kühlofen und/oder das Band gerichtet, um die Bewegungsinformationen der Glasbehälter möglichst quer zu der Standfläche der Glasbehälter gerichtet erfassen zu können. Es hat sich nämlich gezeigt, dass so besonders verlässliche Bewegungsinformationen erfasst werden.

Vorgeschlagen wird ferner ein Verfahren zum Betreiben einer Produktionsanlage oder der hier beschriebenen Produktionsanlage, wobei von einer IS-Maschine Glasbehälter hergestellt und in einem heißen Zustand durch ein Band zu einem Kühlofen gefördert werden, wobei eine Einschiebeeinrichtung taktweise mehrere Glasbehälter gleichzeitig vom Band zu dem Kühlofen fördert, wobei ein System kontinuierlich Lageparameter von den gleichzeitig zu dem Kühlofen geförderten Glasbehältern bereitstellt und/oder an die Einschiebeeinrichtung zum Steuern von Bewegungen der Einschiebeeinrichtung übermittelt.

Nachfolgend wird die Erfindung anhand eines bevorzugten Ausführungsbeispiels unter Bezugnahme auf die Zeichnungen weiter im Detail erläutert.

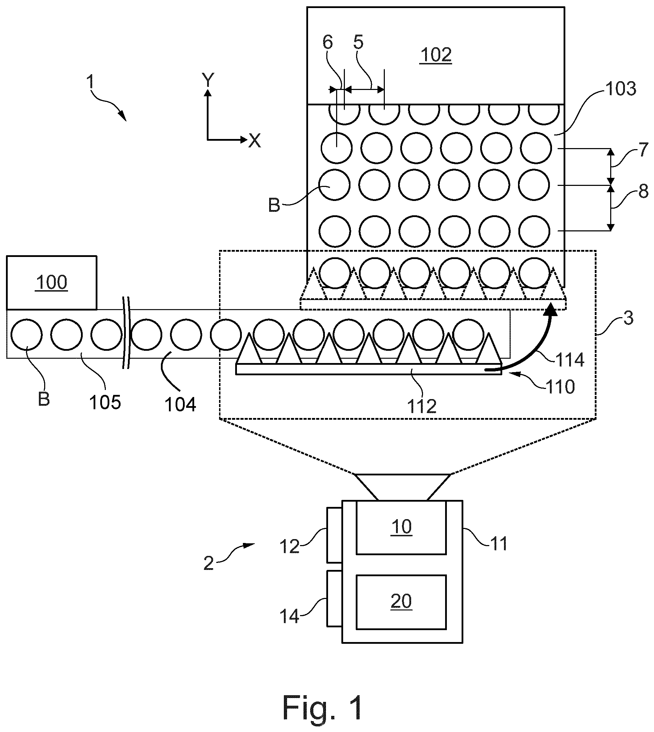

In den Zeichnungen zeigt
- Fig. 1: schematisch eine Produktionsanlage mit einem System gemäß einem bevorzugten Ausführungsbeispiel der Erfindung in einer Draufsicht auf ein Querband, eine Einschiebeeinrichtung, einen Kühlofen und das System.

In Fig. 1 ist schematisch eine Produktionsanlage 1 dargestellt. Die Produktionsanlage 1 weist eine IS-Maschine 100, einen Kühlofen 102, ein zum Fördern von mit der IS-Maschine 100 hergestellten Glasbehältern B zu dem Kühlofen 102 ausgebildetes Querband 104, eine zum Fördern von den Glasbehältern B von dem Querband 104 zu dem Kühlofen 102 ausgebildeten Einschiebeeinrichtung 110 und ein System 2 zur Überwachung der Glasbehältern B auf.

Die Einschiebeeinrichtung 110 weist einen einen Einschieberkamm 112 und typischerweise einen oder mehrere Servomotoren auf. Typischerweise sind die Servomotoren zur Bewegung bzw. zum Antrieb des Einschieberkamms 112 vorgesehen.

Rein exemplarisch ist vorliegend ein Einschieberkamm 112 dargestellt, der zum Schieben von sechs Glasbehältern B ausgebildet ist. In anderen Ausgestaltungen, die nicht dargestellt sind, kann der Einschieberkamm sehr viel mehr Glasbehälter bzw. Flaschen (beispielsweise 10 oder mehr als 10 und/oder bis zu 100 oder mehr als 100 Glasbehälter, vorzugsweise zwischen 50 und 70, insbesondere 60 Glasbehälter) einschieben. Vorliegend sind das Querband 104 und ein Kühlofenband 103 des Kühlofens 102 orthogonal zueinander ausgerichtet.

Die Produktionsanlage 1 wird betrieben, indem die IS-Maschine 100 Glasbehälter B herstellt, die dann in heißem Zustand mittels eines Maschinenbands 105 und des nachfolgenden Querbands 104 zu dem Kühlofen 102 gefördert werden. Vorliegend ist also eine sehr vereinfachte, prinzipielle Anordnung dargestellt, bei der das Querband 104 und das Maschinenband 105 nur exemplarisch und nicht in ihrer typischen Orientierung zueinander dargestellt sind. Nicht dargestellt ist insofern eine Umlenkecke, zu der die Glasbehälter gefördert werden, um dort senkrecht zum Maschinenband 105 mittels des Querbands 104 zum Kühlofen befördert zu werden. An dieser Umlenkecke werden die Glasbehälter um 90° umgelenkt.

Die Einschiebeeinrichtung 110 fördert bzw. schiebt kontinuierlich mehrere Glasbehälter B längs einer Bewegungsbahn 114 gleichzeitig vom Querband 104 auf das Kühlofenband 103. Die Einschiebeeinrichtung 110 wiederholt für eine beispielhafte Gruppierung von jeweils sechs Glasbehältern B also immer wieder die Bewegung längs der Bewegungsbahn 114, um die sechs Glasbehälter B reihenweise zum Kühlofenband 103 zu fördern bzw. schieben. Dabei muss die Einschiebeeinrichtung 110 wiederholt auf die ankommenden Glasbehälter B treffen, damit immer wieder entsprechend der Ausgestaltung des verwendeten Einschieberkamms 112 die jeweilige Anzahl neuer Glasbehälter B, vorliegend also sechs neue Glasbehälter B, vom Querband 104 auf das Kühlofenband 103 gefördert werden. Abweichungen im Takt können beispielsweise zu Verlusten durch Kollision mit und Umkippen von Glasbehältern B führen, zum Erfassen von zu wenigen oder zu vielen Glasbehältern B und/oder zu Fehlpositionierungen bzw. unerwünschten Positionierungen auf dem Kühlofenband 103. Dabei stellt das System 2 kontinuierlich Lageparameter der Glasbehältern B bereit und übermittelt diese an die Einschiebeeinrichtung 110 zum Steuern der Bewegung derselben, insbesondere zum Korrigieren der Bewegungsbahn 114.

Ersichtlich sind die in Förderrichtung Y des Kühlofenbands 103 dritte und vierte Reihe näher aneinander als die entsprechende zweite und dritte Reihe. Insbesondere ist der Abstand 7 kleiner als der Abstand 8, wobei sich die Abstände 7, 8 längs der Laufrichtung des Kühlofenbands 103 bemessen und sich auf den Abstand zweier von der Einschiebeeinrichtung 110 auf das Kühlofenband 103 geschobener Reihen aus Glasbehältern B bezieht. Hierzu ist es gekommen, weil die Einschiebeeinrichtung 110 zu schnell bzw. zu früh erneut eingeschoben hat. Dies ist vorliegend korrigiert worden, indem die Lageparameter an die Einschiebeeinrichtung 110 übermittelt wurden, wodurch die Geschwindigkeit der Einschiebeeinrichtung 110 zumindest vorübergehend derart angepasst wurde, dass die Glasbehälter B längs des Kühlofenbands 103 bzw. in Richtung Y einen gewünschten Abstand erhalten.

Außerdem ist erkennbar, dass die in Förderrichtung Y des Kühlofenbands 103 fünfte Reihe, die im Begriff ist, in den überdachten Kühlofen 102 selbst einzulaufen, um einen Versatz 6 seitlich versetzt zu den nachkommenden vier Reihen ist. Die bereitgestellten Lageparameter enthalten die Information über einen etwaigen Versatz 6, z.B. wie vorliegend in Querrichtung X des Kühlofenbands 103. Dies ist vorliegend korrigiert worden, wozu die Lageparameter an die Einschiebeeinrichtung 110 übermittelt wurden, wodurch die Bewegungsbahn 114 zum Fördern der vier nachfolgenden Reihen derart angepasst wurde, dass die Glasbehälter B entgegen der Richtung X bzw. um den Versatz 6 versetzt auf das Kühlofenband 103 geschoben werden.

Das System 2 weist eine Sensorvorrichtung 10 zum Erfassen von Bewegungsinformationen der bzw. von den Glasbehältern B auf. Die Sensorvorrichtung 10 ist von oben auf das Kühlofenband 103 bzw. das Querband 104 gerichtet. Das System 2 weist ferner eine Steuerungsvorrichtung 20 auf, die auf Grundlage der Bewegungsinformationen Lageparameter der Glasbehälter B bereitstellen bzw. berechnen kann. Die Lageparameter können insbesondere von einer Schnittstelle 14 der Sensorvorrichtung 10 an die Einschiebeeinrichtung 110 übermittelt werden, beispielsweise um die Bewegungsbahn 114 zu korrigieren.

Die Sensorvorrichtung 10 und die Steuerungsvorrichtung 20 sind miteinander integriert ausgebildet. Die Vorrichtungen 10, 20 sind zusammen in einem insbesondere metallischen Schutzgehäuse 11 angeordnet, das diese vor der Hitze der Glasbehälter B schützt. Überdies sorgt eine am Schutzgehäuse 11 angeordnete Kühlungseinrichtung 12 mit einem Lüfter und bedarfsweise oder alternativ mit am Schutzgehäuse 11 angeformten bzw. befestigten Kühlrippen als Kühlstrukturen für thermischen Schutz der Vorrichtungen 10, 20.

Vorliegend ist auch die Schnittstelle 14 am Schutzgehäuse 11 angeordnet bzw. darin untergebracht. Die Schnittstelle 14 kann zweckmäßig eine Steckverbindung und/oder um ein funkfähiges Kommunikationsmodul aufweisen.

Die Sensorvorrichtung 10 weist eine Kamera auf, um Bewegungsinformationen, genauer gesagt Bildinformationen, über die Glasbehälter B in einem Erfassungsfeld 3 zu erfassen. Die Steuerungsvorrichtung 20 kann die Bildinformationen einer Datenverarbeitung unterziehen, um aus den Bildinformationen die Lageparameter zu berechnen.

Das Erfassungsfeld 3 erstreckt sich vorliegend zumindest auf den Bereich, in dem sich die Einschiebeeinrichtung 110 bzw. deren Einschieberkamm 112 bewegen kann. Das Erfassungsfeld 3 deckt insbesondere einen auslaufenden Teil des Querbands 104 und/oder einen anfänglichen Teil des Kühlofenbands 103 des Kühlofens 102 ab.

Die Lageparameter umfassen die Bewegungskurve 114 des Einschieberkamms 112, eine Bewegungskurve einzelner Glasbehälter B von einem Einfädeln in die Einschiebeeinrichtung 100 bis hin zu einem Eingang in den Kühlofen 102, und eine Position der Glasbehälter B auf dem Kühlofenband 103. Insbesondere werden unter den Lageparametern ein Abstand 5 der Glasbehälter B quer zur Förderrichtung Y des Kühlofenbands 103 erfasst.

Es wird vorliegend auch ein Abstand 7, 8 der Glasbehälter B längs der Förderrichtung Y des Kühlofenbands 103 erfasst.

Das System 2 ermöglicht es, einen Versatz zwischen der Einschiebeeinrichtung 110 und einer Position von den Glasbehältern B auf dem Querband 104 längs des Querbands 104 zu erfassen, um damit die Einschiebeeinrichtung 110 in ihrer Taktung zu korrigieren. Zur Ausführung diese Korrektur kann der Einschiebeeinrichtung 110 beispielsweise ein Steuerungsbefehl übermittelt werden, um ein Einfädeln der Glasbehälter B beispielsweise einige Sekundenbruchteile später oder früher durchzuführen, damit die Glasbehälter B wieder mittiger in den Einschieberkamm 112 eintreffen. Das System 2 kann Behälterverluste feststellen und den Ort des Auftretens dieser Verluste bestimmen. Das System 2 kann bei Behälterverlusten beispielsweise eine Warnung und/oder einen Steuerungsbefehl innerhalb der Produktionsanlage 1 ausgeben.

### Bezugszeichenliste

- 1: Produktionsanlage
- 2: System
- 3: Erfassungsfeld
- 5: Abstand
- 6: Versatz
- 7: Abstand
- 8: Abstand
- 10: Sensorvorrichtung
- 11: Schutzgehäuse
- 12: Kühlungseinrichtung
- 14: Schnittstelle
- 20: Steuerungseinrichtung
- 100: IS-Maschine
- 102: Kühlofen
- 103: Kühlofenband
- 104: Querband/Band
- 105: Maschinenband
- 110: Einschiebeeinrichtung
- 112: Einschieberkamm
- 114: Bewegungsbahn

- X: Richtung
- Y: Richtung

## Patentansprüche

1. System (2) zur Überwachung von mittels einer IS-Maschine (100) hergestellten und in einen Kühlofen (102) zu fördernden Glasbehältern, mit einer Sensorvorrichtung (10) zum Erfassen von Bewegungsinformationen der Glasbehälter, wobei die Sensorvorrichtung (10) eine Kamera zum Bereitstellen von Bildinformationen über die Glasbehälter aufweist, und einer Steuerungsvorrichtung (20), die eingerichtet ist, auf der Grundlage der Bewegungsinformationen Lageparameter der Glasbehältern bereitzustellen und an eine zum Fördern der Glasbehälter zu dem Kühlofen (102) vorgesehene Einschiebeeinrichtung (110) zum Steuern von Bewegungen der Einschiebeeinrichtung (110) zu übermitteln, wobei die Lageparameter eine Bewegungskurve eines Einschieberkamms (112) der Einschiebeeinrichtung (110) und eine Bewegungskurve der Glasbehälter von einem Einfädeln der Glasbehälter in die Einschiebeeinrichtung (110) bis hin zu einem Eingang in den Kühlofen (102) umfassen.

2. System (2) nach Anspruch 1, wobei die Steuerungsvorrichtung (20) zum Durchführen einer Datenverarbeitung ausgebildet ist, um aus den Bildinformationen die Lageparameter zu berechnen.

3. System (2) nach einem der voranstehenden Ansprüche, wobei die Lageparameter umfassen:
eine Position der Glasbehälter auf einem Band (104), das die Glasbehälter senkrecht zum einem in den Kühlofen (102) führenden Kühlofenband (103) transportiert.

4. System (2) nach einem der voranstehenden Ansprüche, wobei die Lageparameter einen Versatz zwischen der Einschiebeeinrichtung (110) und einer Position der Glasbehälter auf dem Band (104) umfassen, das die Glasbehälter senkrecht zum einem in den Kühlofen (102) führenden Kühlofenband (103) transportiert.

5. System (2) nach einem der voranstehenden Ansprüche, wobei die Lageparameter ein Auftreten eines Behälterverlustes umfassen, wobei der Behälterverlustes einen umgefallenen und/oder fehlgeschobenen und/oder beschädigten Glasbehälter betrifft.

6. System (2) nach dem voranstehenden Anspruch, wobei die Lageparameter den Ort des Auftretens des Behälterverlustes umfassen.

7. System (2) nach einem der voranstehenden Ansprüche, aufweisend eine Schnittstelle (14) zur Kommunikation mit der IS-Maschine (100) und/oder mit der Einschiebeeinrichtung (110).

8. Produktionsanlage (1) aufweisend wenigstens eine IS-Maschine (100), einen Kühlofen (102), ein zum Fördern von mit der IS-Maschine (100) hergestellten Glasbehältern zu dem Kühlofen (102) ausgebildetes Band (104), eine zum Fördern von den Glasbehältern von dem Band (104) zu dem Kühlofen (102) ausgebildeten Einschiebeeinrichtung (110) und ein System (2) nach einem der voranstehenden Ansprüche.

## Claims

1. A system (2) for monitoring glass containers that are produced by means of an IS machine (100) and are to be conveyed in an annealing furnace (102), comprising a sensor device (10) for capturing movement information of the glass containers, wherein the sensor device (10) comprises a camera for providing image information relating to the glass containers, and a control device (20), which is configured to provide position parameters of the glass containers on the basis of the movement information and to transmit them to an insertion apparatus (110) provided for conveying the glass containers to the annealing furnace (102) in order to control movements of the insertion apparatus (110), wherein the position parameters include a movement curve of a ridged inserter (112) of the insertion apparatus (110) and a movement curve of the glass containers from the glass containers being threaded into the insertion apparatus (110) through to them entering the annealing furnace (102).

2. The system (2) according to claim 1, wherein the control device (20) is designed to carry out data processing in order to calculate the position parameters from the image information.

3. The system (2) according to any one of the preceding claims, wherein the position parameters include:
a position of the glass containers on a belt (104) which transports the glass containers perpendicularly to an annealing furnace belt (103) passing into the annealing furnace (102).

4. The system (2) according to any one of the preceding claims, wherein the position parameters include an offset between the insertion apparatus (110) and a position of the glass containers on the belt (104) which transports the glass containers perpendicularly to an annealing furnace belt (103) passing into the annealing furnace (102).

5. The system (2) according to any one of the preceding claims, wherein the position parameters include the occurrence of the loss of a container, wherein the loss of a container relates to a glass container that has fallen over and/or has been incorrectly inserted and/or has been damaged.

6. The system (2) according to the preceding claim, wherein the position parameters include the location of the occurrence of the loss of a container.

7. The system (2) according to any one of the preceding claims, comprising an interface (14) for communication with the IS machine (100) and/or with the insertion apparatus (110).

8. A production facility (1) comprising at least one IS machine (100), an annealing furnace (102), a belt (104) designed to convey glass containers produced by the IS machine (100) to the annealing furnace (102), an insertion apparatus (110) designed to convey the glass containers from the belt (104) to the annealing furnace (102), and a system (2) according to any one of the preceding claims.

## Revendications

1. Système (2) de surveillance de récipients de verre qui sont produits au moyen d'une machine IS (100) et doivent être convoyés dans un four de recuit (102), comprenant un dispositif de capteur (10) destiné à capturer les informations de mouvement des récipients de verre, dans lequel le dispositif de capteur (10) comprend une caméra destinée à fournir des informations d'image relatives aux récipients de verre, et un dispositif de commande (20), qui est configuré pour fournir des paramètres de position des récipients de verre sur la base des informations de mouvement et pour les transmettre à un appareil d'insertion (110) fourni pour convoyer les récipients de verre jusqu'au four de recuit (102) afin de commander les mouvements de l'appareil d'insertion (110), dans lequel les paramètres de position incluent une courbe de mouvement d'un dispositif d'insertion strié (112) de l'appareil d'insertion (110) et une courbe de mouvement des récipients de verre depuis l'enfilage des récipients de verre dans l'appareil d'insertion (110) jusqu'à l'entrée des mêmes récipients de verre dans le four de recuit (102).

2. Système (2) selon la revendication 1, dans lequel le dispositif de commande (20) est conçu pour mettre en œuvre un traitement de données afin de calculer les paramètres de position à partir des informations d'image.

3. Système (2) selon l'une quelconque des revendications précédentes, dans lequel les paramètres de position incluent :
une position des récipients de verre sur une courroie (104) qui transporte les récipients de verre perpendiculairement à une courroie de four de recuit (103) passant dans le four de recuit (102).

4. Système (2) selon l'une quelconque des revendications précédentes, dans lequel les paramètres de position incluent un décalage entre l'appareil d'insertion (110) et une position des récipients de verre sur la courroie (104) qui transporte les récipients de verre perpendiculairement à une courroie de four de recuit (103) passant dans le four de recuit (102).

5. Système (2) selon l'une quelconque des revendications précédentes, dans lequel les paramètres de position incluent l'occurrence de la perte d'un récipient, dans lequel la perte d'un récipient est liée à la chute d'un récipient de verre et/ou à son insertion incorrecte et/ou à son endommagement.

6. Système (2) selon la revendication précédente, dans lequel les paramètres de position incluent l'emplacement de l'occurrence de la perte d'un récipient.

7. Système (2) selon l'une quelconque des revendications précédentes, comprenant une interface (14) pour communication avec la machine IS (100) et/ou avec l'appareil d'insertion (110).

8. Installation de production (1) comprenant au moins une machine IS (100), un four de recuit (102), une courroie (104) conçue pour convoyer des récipients de verre produits par la machine IS (100) jusqu'au four de recuit (102), un appareil d'insertion (110) conçu pour convoyer les récipients de verre depuis la courroie (104) jusqu'au four de recuit (102), et un système (2) selon l'une quelconque des revendications précédentes.
